# EUROPÄISCHE PATENTANMELDUNG

(11) **EP 1 188 611 A1**
(43) Veröffentlichungstag der Anmeldung: **20.03.2002**
(21) Anmeldenummer: 01116494.4
(22) Anmeldetag: 06.07.2001
(51) Int. Cl.: B60N 3/10

(54) **Halter für einen Getränkebehälter**

(30) Priorität: 20.07.2000 DE 10035272
(71) Anmelder: fischerwerke Artur Fischer GmbH & Co. KG, 72178 Waldachtal (DE)
(72) Erfinder: Kaupp, Klaus, 72178 Waldachtal (DE)

(57) **Zusammenfassung**

Die Erfindung betrifft einen Halter (10) für einen Getränkebehälter zum versenkten Einbau in beispielsweise eine Mittelkonsole eines Kraftwagens. Die Erfindung schlägt vor, den Halter (10) mit einem halbzylinderförmigen Gehäuse (12) und einem zylinderförmig gewölbten Halteelement (20) auszubilden, das mit einer Kreisbogenführung (24) verschiebbar im Gehäuse (12) aus einer im Gehäuse (12) versenkten Nicht-Gebrauchsstellung in eine aus dem Gehäuse (12) vorstehende Gebrauchsstellung und umgekehrt verschiebbar geführt ist. Das Halteelement (20) weist eine Einstellöffnung (26) auf, in die in der Gebrauchsstellung der Getränkebehälter einstellbar ist. Ein beim Verschieben vom Halteelement (20) umschriebener Raum lässt sich beispielsweise als Ablagefach nutzen, so dass der Halter (10) eine gute Nutzung seines Einbauraums ermöglicht. Weiterer Vorteil ist die ästhetische und ungewöhnliche Gestaltung des Halters (10) mit seinem bogenförmigen Halteelement (20).

## Beschreibung

Die Erfindung betrifft einen Halter für einen Getränkebehälter, beispielsweise einen Becher, eine Tasse oder eine Dose, mit den Merkmalen des Oberbegriffs des Anspruchs 1.

Derartige Halter sind in einer nahezu unüberschaubaren Vielzahl an Ausführungsformen bekannt. Bekannte derartige Halter weisen ein Halteelement mit einer Einstellöffnung zum Einstellen des Getränkebehälters auf. Des Weiteren weisen die Halter eine Schiebeführung auf, mit der das Halteelement zwischen einer Nicht-Gebrauchsstellung und einer Gebrauchsstellung hin- und herverschiebbar geführt sind. In der Nicht-Gebrauchsstellung ist das Halteelement üblicherweise versenkt in beispielsweise einem Armaturenbrett eines Kraftwagens. In der Gebrauchsstellung steht das Halteelement aus dem Armaturenbrett vor, so dass die Einstellöffnung zugänglich ist und ein Getränkebehälter eingestellt und entnommen werden kann.

Der Erfindung liegt die Aufgabe zu Grunde, einen Halter der vorstehend genannten Art mit guter Nutzung eines Einbauraums auszubilden.

Diese Aufgabe wird erfindungsgemäß durch die Merkmale des Anspruchs 1 gelöst. Das Halteelement des erfindungsgemäßen Halters ist in einer Verschieberichtung bogenförmig gewölbt und seine Schiebeführung ist als Bogenführung ausgebildet. Das Halteelement des erfindungsgemäßen Halters ist bogenförmig in Richtung seiner Wölbung von der Nicht-Gebrauchsstellung in die Gerbrauchsstellung und umgekehrt verschiebbar, wobei die Wölbung des Halteelements mit einer Krümmung einer beim Verschieben vom Halteelement beschriebenen Bahn übereinstimmen kann, jedoch nicht muss. Durch die bogenförmige Ausbildung des Halteelements und seine bogenförmige Verschiebebewegung umschreibt das Halteelement beim Verschieben einen Raum, der als Fach beispielsweise zum Aufbewahren von Kleinteilen, zum Einbau von Schaltern, Geräten oder sonstigem, zur Unterbringung eines Aschenbechers, eines Münzfachs oder dgl. nutzbar ist. Dadurch hat die Erfindung den Vorteil einer guten Nutzung eines für den Halter notwendigen Einbauraums. Ein weiterer Vorteil der Erfindung liegt auf ästhetischem Gebiet in der ungewöhnlichen Formgebung des Halteelements und seiner ungewöhnlichen Verschiebebewegung.

In bevorzugter Ausgestaltung der Erfindung ist das Halteelement kreisbogenförmig gewölbt, es weist die Form eines Abschnitts einer Zylindermantelfläche auf. Die Schiebeführung des Halters ist bei dieser Ausgestaltung der Erfindung kreisbogenförmig ausgebildet, sie führt das Halteelement auf einer Kreisbahn, die koaxial zu einer gedachten Achse des zylinderförmigen Halteelements ist.

Bei einer Weiterbildung der Erfindung weist der Halter ein Stützelement auf, welches einen in die Einstellöffnung des Halteelements eingestellten Getränkebehälter an einer Stelle oder einem Bereich seines Umfangs gegen Umkippen abstützt. Das Stützelement ist schwenkbar von einer am Halterelement anliegenden in eine vom Halteelement abstehende Stellung und umgekehrt schwenkbar am Halteelement angebracht. Das Stützelement stützt einen in den Halter eingestellten Getränkebehälter sicher gegen Um-kippen ab. Dadurch dass das Stützelement in eine am Halteelement anliegende Stellung schwenkbar ist, lässt es sich bei Nicht-Gebrauch des Halters platzsparend unterbringen.

Vorzugsweise ist das Stützelement korrespondierend zum Halteelement bogenförmig gewölbt, weist also eine an das Halteelement angepasste Krümmung auf. Dadurch ist es möglich, das Stützelement bei Nicht-Gebrauch in eine platzsparende, im Wesentlichen über seine gesamte Länge in Umfangsrichtung am Halteelement anliegende Stellung zu schwenken.

Die Erfindung wird nachfolgend anhand eines in der Zeichnung dargestellten Ausführungsbeispiels näher erläutert. Es zeigen:

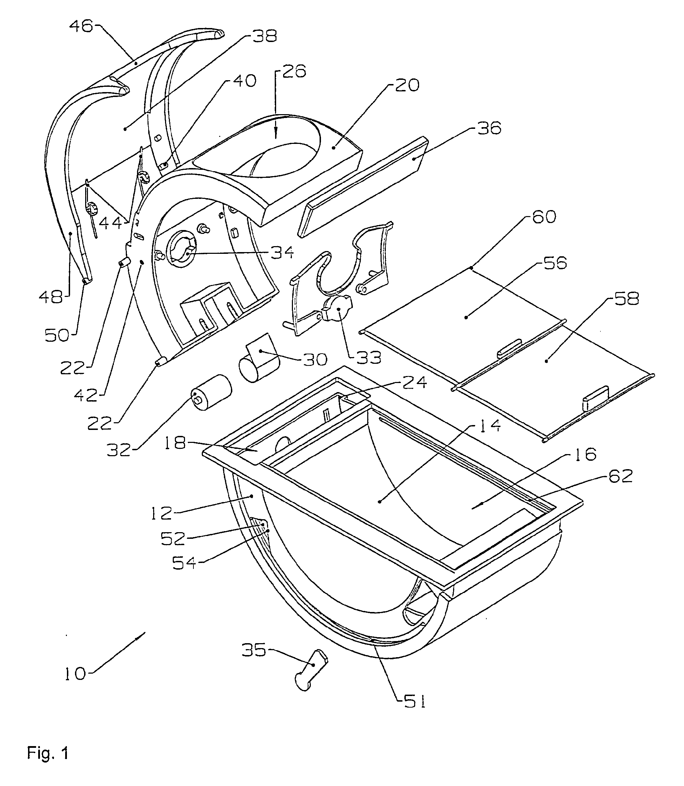

- Figur 1: eine perspektivische Explosionsdarstellung eines erfindungsgegemäßen Halters;
- Figuren 2 a bis c: den Halter aus Figur 1 in zusammengesetztem Zustand in perspektivischer Darstellung in unterschiedlichen Stellungen;
- Figuren 3 a und b: einen Querschnitt des Halters aus Figur 1 in zusammengesetztem Zustand in zwei unterschiedlichen Stellungen; und

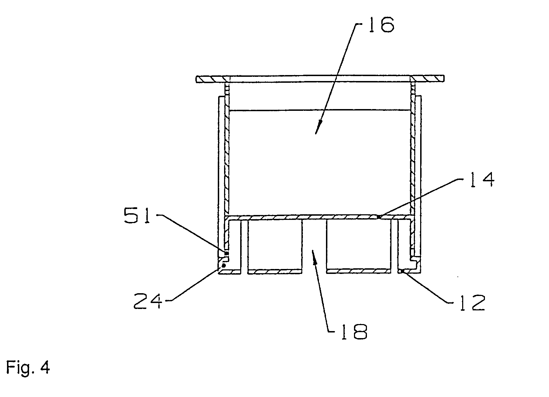

- Figur 4: einen Abschnitt eines Gehäuses des Halters aus Figur 1.

Der in der Zeichnung dargestellte, erfindungsgemäße Halter 10 für einen Getränkebehälter wie beispielsweise einen Becher, eine Tasse oder eine Dose ist zum versenkten Einbau in beispielsweise eine Mittelkonsole eines nicht dargestellten Kraftwagens vorgesehen. Der Halter 10 weist ein halbzylinderförmiges Gehäuse 12 auf, das von einer zum Gehäuse 12 koaxialen, halbzylinderförmigen Zwischenwand 14 in ein Ablagefach 16 für Kleingegenstände und einen zylinderförmig gebogenen Aufnahmeraum 18 für ein Halteelement 20 unterteilt. Das Halteelement 20 weist eine mit dem Aufnahmeraum 18 korrespondierende, zylinderförmig gewölbte Form auf, das Halteelement 20 bildet einen Zylindermantelabschnitt, der sich in Umfangsrichtung um etwas weniger als 180° erstreckt.

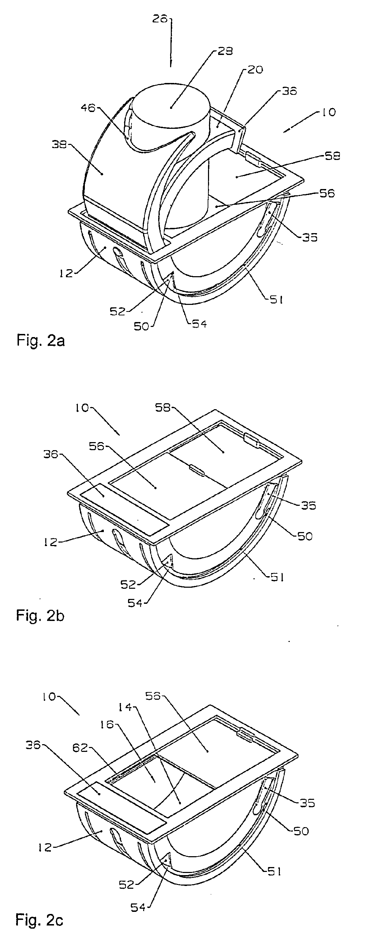

Das Halteelement 20 ist mit einer Kreisbogenführung 22, 24 in Richtung seiner Wölbung verschiebbar im Gehäuse 12 geführt. Dabei ist eine gedachte Achse einer vom Halteelement 20 beim Verschieben beschriebenen Kreisbogenbahn koaxial zu einer gedachten Symmetrieachse des Gehäuses 12, die mit einer gedachten Symmetrieachse des zylinderförmigen Halteelements 20 übereinstimmt. Zur Kreisbogenführung weist das Halteelement 20 auf jeder Seite zwei nach außen abstehende Führungszapfen 22 auf. Dabei ist einer der beiden Führungszapfen 22 an einem Ende des Halteelements 20 und der andere Führungszapfen 22 mit Abstand in Umfangsrichtung vom einen Führungszapfen 22 angeordnet. Die Führungszapfen 22 liegen in einer Führungsbahn 24 des Gehäuses 12 ein, die von einer Nut in jeder Seitenwand des Gehäuses 12 gebildet ist. Die Führungsbahn 24 verläuft in einem Kreisbogen koaxial zur gedachten Symmetrieachse des Gehäuses 12. Durch die Kreisbogenführung 22, 24 lässt sich das Halteelement 20 zwischen einer im Aufnahmeraum 18 des Gehäuses 12 versenkten Nicht-Gebrauchsstellung auf einer kreisbogenförmigen Bahn in eine aus dem Gehäuse 12 vorstehende Gebrauchsstellung verschieben. Die Nicht-Gebrauchsstellung ist in Figuren 2 b, c und 3 b dargestellt, die Gebrauchsstellung ist in Figuren 2 a und 3 a dargestellt.

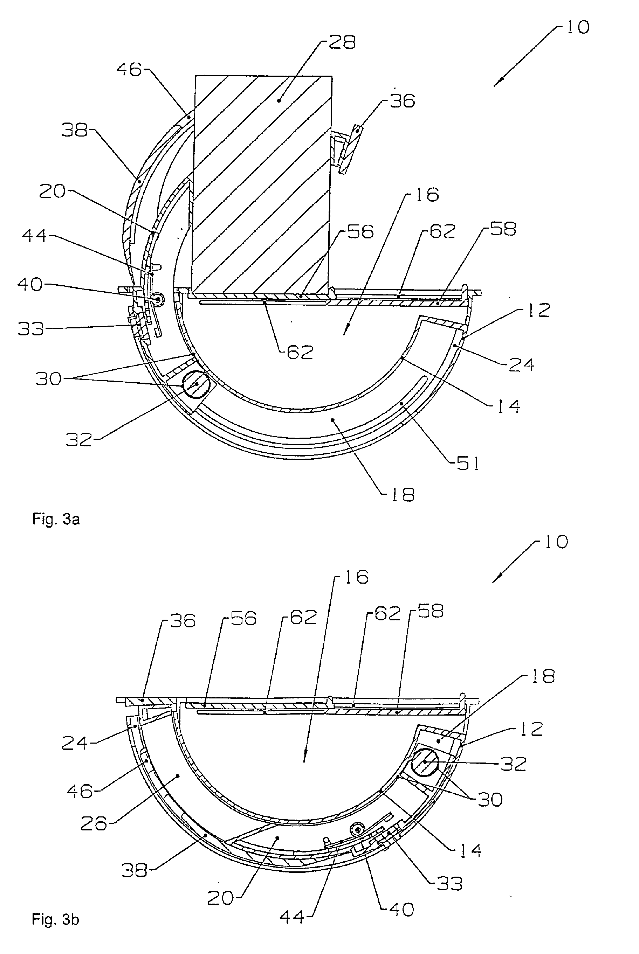

An seinem in der Gebrauchsstellung aus dem Gehäuse 12 vorstehenden Ende weist das Halteelement 20 eine in Draufsicht kreisförmige Einstellöffnung 26 zum Einstellen eines Getränkebehälters wie beispielsweise der in Figur 3 a dargestellten Getränkedose 28 auf.

Das Verschieben des Halteelements 20 in die Gebrauchsstellung erfolgt mittels eines Federelements. Im dargestellten und beschriebenen Ausführungsbeispiel der Erfindung ist als Federelement eine Rollfeder 30 gewählt. Die Rollfeder 30 ist eine sich durch ihre Elastizität selbst aufwickelnde Bandfeder, also eine Zugfeder. Die Rollfeder 30 ist auf einer Walze 32 aufgenommen, die drehbar an dem im Gehäuse 12 geführten Ende des Halteelements 20 gelagert ist. Ein abwickelbares Ende der Bandfeder 30 ist nahe einer Mündung des Aufnahmeraums 18 an der Zwischenwand 14 des Gehäuses 12 befestigt. Ein abgewickelter Teil der Rollfeder 30 liegt also an einer Außen- bzw. konvexen Seite der Zwischenwand 14 an. Die Rollfeder 30 verschiebt das Halteelement 20 in die aus dem Gehäuse 12 vorstehende Gebrauchsstellung. Ein Verschieben des Halteelements 20 in die im Gehäuse 12 versenkte Nicht-Gebrauchsstellung erfolgt von Hand gegen eine Federkraft der Rollfeder 30. Eine entriegelbare Verriegelungseinrichtung hält das Halteelement 20 gegen die Federkraft der Rollfeder 30 in der im Gehäuse 12 versenkten Nicht-Gebrauchsstellung. Die Verriegelungseinrichtung ist als an sich bekannte und deswegen hier nicht näher beschriebene Push-Push-Mechanik oder Herzkurvensteuerung mit einem schwenkbar an einer Seitenwand des Gehäuses 12 gelagerten Riegel 35 ausgebildet. Eine Entriegelung der Verriegelungseinrichtung erfolgt durch einen kurzen Druck auf das in der versenkten Nicht-Gebrauchsstellung verriegelte Halteelement 20 in Richtung der Nicht-Gebrauchsstellung. Die Verschiebebewegung wird von einem an sich bekannten Rotationsdämpfer 33 gedämpft, der in eine Aufnahme 34 des Halteelements 20 eingesetzt ist.

An dem in der Gebrauchsstellung aus dem Gehäuse 12 vorstehenden Ende des Halteteils 20 ist eine Blende 36 angebracht, die die Öffnung des Aufnahmeraums 18 bündig verschließt, wenn das Halteelement 20 in die versenkte Nicht-Gebrauchsstellung verschoben ist.

Am Halteelement 20 des erfindungsgemäßen Halters 10 ist mittels einer Zapfenverbindung ein Stützelement 38 schwenkbar angebracht. Das Stützelement 38 ist auf einer Außen- bzw. konvexen Seite des Halteelements 20 angeordnet und weist eine mit der Wölbung des Halteelements 20 korrespondierende Wölbung auf. Das Stützelement 38 weist also ebenfalls die Form eines Zylindermantelabschnitts auf. Zur schwenkbaren Verbindung des Stützelements 38 mit dem Halteelement 20 weist das Stützelement 38 auf jeder Seite einen nach innen stehenden Schwenkzapfen 40 auf, der drehbar in einem Lagerloch 42 in Seiten des Haltelements 20 einliegt. Zwei auf die Schwenkzapfen 40 aufgesetzte Schenkelfedern 44 schwenken das Stützelement 38 in der Gebrauchsstellung des Halteelements 20 in eine in einem spitzen Winkel vom Haltelement 20 nach außen abstehende Stellung, wie sie in Figuren 2 a und 3 a gezeigt ist. Eine halbkreisförmige Ausnehmung 46 des Stützelements 38 befindet sich in der Gebrauchsstellung in etwa deckungsgleich mit der Einstellöffnung 26 oberhalb des Halteelements 20. Die Ausnehmung 46 stützt einen in die Einstellöffnung 26 eingestellten Getränkebehälter 28 oberhalb des Halteelements 20 in einem Umfangsbereich ab, so dass der Getränkebehälter 28 sicher gegen Kippen gehalten ist.

In der Nicht-Gebrauchsstellung ist das Stützelement 38 in eine an der Außenseite des Haltelements 20 anliegende Stellung geschwenkt. Zu diesem Zweck weist das Stützelement 38 mit ihm einstückige und starre Schwenkarme 48 auf, die das Stützelement 38 kreisbogenförmig verlängernd an seinem der Ausnehmung 46 fernen Ende angeordnet sind. Von freien Enden der Schwenkarme 48 stehen Zapfen 50 nach außen ab, die in Führungsbahnen 51 des Gehäuses 12 eingreifen. Die Führungsbahnen 51 sind als kreisbogenförmige Schlitze in Seitenwänden des Gehäuses 12 ausgebildet, sie sind koaxial zur gedachten Symmetrieachse des Gehäuse 12 angeordnet und gegenüber den Führungsbahnen 24 für das Halteelement 20 radial nach innen versetzt. Die Führungsbahnen 51 zum Verschwenken des Stützelements 38 weisen nahe der Mündung des Aufnahmeraums 18 eine Erweiterung 52 nach innen auf, die eine Rampe 54 bildet. Befindet sich das Halteelement 20 in seiner aus dem Gehäuse 12 vorstehenden Gebrauchsstellung, so befinden sich die Zapfen 50 der Schwenkarme 48 des Stützelements 38 in der Erweiterung 52 der Führungsbahnen 51. Die Erweiterung 52 erlaubt ein Verschwenken der Zapfen 50 nach innen und somit das bereits beschriebene Verschwenken des Stützelements 38 in die unter einem spitzen Winkel vom Halteelement 20 nach außen abstehende Stellung. Wird das Halteelement 20 in seine Nicht-Gebrauchsstellung verschoben, gleiten die Zapfen 50 der Schwenkarme 48 des Stützelements 38 an den Rampen 54 entlang und werden dabei nach außen in die Führungsbahn 51 bewegt. Dabei verschwenken die Zapfen 50 das Stützelement 38 gegen die Federkraft der Schenkelfedern 44 nach innen in die am Haltelement 20 außen anliegende Stellung.

Das Ablagefach 16 ist mit zwei Deckeln 56, 58 verschließbar, die jeweils etwa eine Hälfte des Ablagefachs 16 abdecken. Die Deckel 56, 58 weisen seitlich nach außen abstehende Schiebezapfen 60 auf, die in übereinander liegenden, geraden Nuten 62 in Seitenwände des Gehäuses 12 einliegen, so dass die Deckel 56, 58 verschiebbar sind. Zum Gebrauch des erfindungsgemäßen Halters 10 werden die beiden Deckel 56, 58 geschlossen, wie in Figuren 2 a, 2 b und 3 a dargestellt. Ein in die Einstellöffnung 26 des in die Gebrauchsstellung verschobenen Halteelements 20 eingestellter Getränkebehälter 28 steht auf einem der beiden Deckel 56 auf. Bei Nicht-Gebrauch des Halters 10 kann jeweils einer der beiden Deckel 56, 58 auf den jeweils anderen Deckel 58, 56 verschoben werden, so dass das Ablagefach 16 zugänglich ist. Dies ist in Figur 2 c dargestellt. Selbstverständlich können die Deckel 56, 58 auch bei in die Gebrauchsstellung verschobenem Halteelement 20 verschoben und das Ablagefach 16 geöffnet werden.

## Patentansprüche

1. Halter für einen Getränkebehälter, mit einem Halteelement, das eine Einstellöffnung für den Getränkebehälter aufweist, und mit einer Schiebeführung, mit der das Halteelement aus einer Nicht-Gebrauchsstellung in eine Gebrauchsstellung und umgekehrt verschiebbar geführt ist, **dadurch gekennzeichnet, dass** das Halteelement (20) in einer Verschieberichtung bogenförmig gewölbt ist, und dass die Schiebeführung (22, 24) als Bogenführung ausgebildet ist und das Halteelement (20) in Richtung seiner Wölbung in einem Bogen verschiebbar führt.

2. Halter nach Anspruch 1, **dadurch gekennzeichnet, dass** das Halteelement (20) die Form eines Zylindermantelabschnitts aufweist, und dass die Schiebeführung (22, 24) als Kreisbogenführung ausgebildet ist.

3. Halter nach Anspruch 1, **dadurch gekennzeichnet, dass** der Halter (10) ein Fach (16) in einem vom Halteelement (20) bei dessen Verschiebung umschriebenen Raum aufweist.

4. Halter nach Anspruch 1, **dadurch gekennzeichnet, dass** der Halter (10) ein Stützelement (38) aufweist, das zwischen einer am Haltelement (20) anliegenden und einer vom Halteelement (20) abstehenden Stellung hin- und herschwenkbar am Haltelement (20) angebracht ist, und das in seiner vom Halteelement (20) abstehenden Stellung einen in die Einstellöffnung (26) des Halteelements (20) eingestellten Getränkebehälter (28) seitlich abstützt.

5. Halter nach Anspruch 1, **dadurch gekennzeichnet, dass** das Stützelement (38) korrespondierend zum Halteelement (20) bogenförmig gewölbt ist.
